# EUROPÄISCHE PATENTSCHRIFT

(11) **EP 3 883 827 B1**
(45) Veröffentlichungstag und Bekanntmachung des Hinweises auf die Patenterteilung: **28.09.2022**
(21) Anmeldenummer: 19795182.5
(22) Anmeldetag: 25.10.2019
(51) Int. Cl.: B60T 8/1755, B60T 8/1761

(54) **VERFAHREN UND STEUERGERÄT ZUM STEUERN EINER FESTSTELLBREMSE FÜR EIN FAHRZEUG UND FESTSTELLBREMSSYSTEM FÜR EIN FAHRZEUG**
METHOD AND CONTROL DEVICE FOR CONTROLLING A PARKING BRAKE FOR A VEHICLE, AND PARKING BRAKE SYSTEM FOR A VEHICLE
PROCÉDÉ ET APPAREIL DE COMMANDE POUR LA COMMANDE D'UN FREIN DE STATIONNEMENT POUR UN VÉHICULE ET SYSTÈME DE FREIN DE STATIONNEMENT POUR UN VÉHICULE

(30) Priorität: 19.11.2018 DE 102018128946
(43) Veröffentlichungstag der Anmeldung: 29.09.2021
(73) Patentinhaber: KNORR-BREMSE Systeme für Nutzfahrzeuge GmbH, 80809 München (DE)
(72) Erfinder: REICHERT, Matthias, 71282 Hemmingen (DE)
(86) Internationale Anmeldenummer: PCT/EP2019/079307
(87) Internationale Veröffentlichungsnummer: WO 2020/104138

(56) Entgegenhaltungen:
- WO-A1-2004/054862
- DE-A1- 10 064 508
- DE-A1-102008 009 882
- US-A- 5 775 785

## Beschreibung

Die vorliegende Erfindung bezieht sich auf ein Verfahren zum Steuern einer Feststellbremse für ein Fahrzeug, auf ein entsprechendes Steuergerät und auf ein Feststellbremssystem für ein Fahrzeug.

Bei einer elektronischen Parkbremse (EPB) kann es in einem Fahrzeug zu einer Betätigung während der Fahrt kommen. Eine solche Parkbremse kann jedoch herkömmlicherweise lediglich mit Rückmeldung von Raddrehzahlen auf ein Blockieren der Räder reagieren und eine Bremskraft durch Belüften von Federspeichern in geeigneter Weise reduzieren.

Die DE 10 2008 009 882 A1 offenbart eine Feststellbremse einer Bremsanlage für ein Fahrzeug, mit einer Blockierschutzeinrichtung der Feststellbremse, die anhand eines Signals, welches von einer Drehzahl eines in dem Fahrzeug vorhandenen Motors, eines Getriebes oder einer Antriebswelle abhängig ist, ein Blockieren oder einen überhöhten Schlupf eines durch die Feststellbremse bremsbaren Rades verhindert.

Vor diesem Hintergrund ist es die Aufgabe der vorliegenden Erfindung, ein verbessertes Verfahren zum Steuern einer Feststellbremse für ein Fahrzeug, ein verbessertes Steuergerät und ein verbessertes Feststellbremssystem für ein Fahrzeug zu schaffen. Diese Aufgabe wird durch ein Verfahren zum Steuern einer Feststellbremse für ein Fahrzeug, durch ein entsprechendes Steuergerät, durch ein Feststellbremssystem für ein Fahrzeug und durch ein entsprechendes Computerprogramm gemäß den Hauptansprüchen gelöst.

Gemäß Ausführungsformen kann insbesondere bei einer unbeabsichtigten Anforderung einer Betätigung einer Feststellbremse bzw. Parkbremse eines Fahrzeugs eine Bremskraft intermittierend reduziert werden, um durch ein derartiges Pulsen oder gepulstes Betätigen einem Blockieren zumindest einer Achse, die mit einer Feststellbremse mit Federspeicher ausgerüstet ist, entgegenzuwirken und die Möglichkeit der Seitenführung einer solchen Achse zu erhöhen. Dieses Pulsen kann insbesondere durch eine Funktion der Feststellbremse in regelmäßigen Abständen, beispielsweise geschwindigkeitsabhängig und zusätzlich oder alternativ betätigungsabhängig, realisiert werden.

Vorteilhafterweise kann gemäß Ausführungsformen insbesondere bei einer elektronischen Parkbremse eines Fahrzeugs ungewolltes Bremsen mit der Parkbremse bzw. Feststellbremse während der Fahrt vermieden werden. Somit kann eine Risikominimierung beim Verzögern mit der Feststellbremse während der Fahrt des Fahrzeugs durch Pulsen eines Bremsdrucks der Feststellbremse Beziehung zweite Parkbremse erreicht werden. Beispielsweise bei einer Fehlinformation von einer Betätigungseinrichtung (HCU, Hand Control Unit) an die Feststellbremse, wobei ein fehlerhafter Bremswunsch im gültigen Bereich vorliegen kann, kann mit dem Pulsen bzw. der gepulsten Betätigung verhindert werden, dass das Fahrzeug überraschend und ungewollt mittels der Feststellbremse verzögert, betroffene Räder blockieren und das Fahrzeug instabil wird. Somit kann eine Stabilität des Fahrzeugs auch bei einer fehlerhaften Anforderung einer Betätigung der Feststellbremse beibehalten bzw. erhöht werden. Durch das Pulsen der Bremskraft kann zudem der Fahrer haptisch gewarnt werden.

Es wird ein Verfahren zum Steuern einer Feststellbremse für ein Fahrzeug vorgestellt, wobei die Feststellbremse zumindest einen Federspeicher aufweist und zumindest einer Achse des Fahrzeugs zugeordnet ist, wobei das Verfahren folgende Schritte aufweist:
Einlesen eines Anforderungssignals, das eine angeforderte Betätigung der Feststellbremse repräsentiert, und von Fahrdaten des Fahrzeugs; und
Erzeugen eines Betätigungssignals zum Betätigen der Feststellbremse unter Verwendung des Anforderungssignals und der Fahrdaten, wobei das Betätigungssignal für eine einstellbare Zeitdauer ein gepulstes Betätigen der Feststellbremse bewirkt, um die Feststellbremse zu steuern.

Das Verfahren kann bzw. die Schritte des Verfahrens können unter Verwendung eines Steuergeräts ausgeführt werden. Bei dem Fahrzeug kann es sich um ein Nutzfahrzeug handeln, wie beispielsweise einen Lastkraftwagen oder dergleichen. Die Fahrdaten können eine Geschwindigkeit, eine Zuladung, eine Beschleunigung, einen Schlupf von Rädern des Fahrzeugs auf der Fahrbahn und zusätzlich oder alternativ weitere statische oder dynamische Parameter repräsentieren.

Gemäß einer Ausführungsform kann im Schritt des Erzeugens das Betätigungssignal, das für die einstellbare Zeitdauer das gepulste Betätigen der Feststellbremse bewirkt, erzeugt werden, wenn die Fahrdaten auf eine Bewegung des Fahrzeugs hindeuten. Eine solche Ausführungsform bietet den Vorteil, dass insbesondere auch bei unabsichtlichem Betätigungswunsch der Feststellbremse während der Fahrt Sicherheit und Stabilität des Fahrzeugs erhöht werden können.

Auch kann im Schritt des Erzeugens die einstellbare Zeitdauer abhängig von einem Pegel des Anforderungssignals und zusätzlich oder alternativ abhängig von den Fahrdaten eingestellt werden. Dabei kann der Pegel des Anforderungssignals eine Auslenkung einer Betätigungseinrichtung repräsentieren, die das Anforderungssignal bereitstellt. Eine solche Ausführungsform bietet den Vorteil, dass die Zeitdauer, während der die Feststellbremse gepulsten betätigt wird, situationsabhängig und bedarfsgerecht gewählt werden kann, um Sicherheit und Stabilität des Fahrzeugs zu verbessern.

Ferner kann im Schritt des Erzeugens ein Betätigungssignal erzeugt werden, das nach einem Ablauf der einstellbaren Zeitdauer abhängig von dem Anforderungssignal ein dauerhaftes Betätigen der Feststellbremse bewirkt. Hierbei kann das Anforderungssignal eine weiterhin angeforderte Betätigung repräsentieren. Ein dauerhaftes Betätigen kann ein vollständiges Entlüften des zumindest einen Fehlerspeichers und zusätzlich oder alternativ ein Betätigen bis zu einem Stillstand des Fahrzeugs oder bis zu einem Erreichen eines Abbruchkriteriums einer Betätigung der Feststellbremse repräsentieren. Eine solche Ausführungsform bietet den Vorteil, dass nach der haptischen Warnung durch das gepulste Betätigen bei weiterhin bestehendem Anforderungssignal eine Bremsung mittels der Feststellbremse eingeleitet und ausgeführt werden kann. Somit kann dem Bremswunsch noch entsprochen werden, falls die während der einstellbaren Zeitdauer gebotene Möglichkeit zur Korrektur einer Bedienung der das Anforderungssignal ausgebenden Betätigungseinrichtung ungenutzt verstrichen ist.

Insbesondere kann im Schritt des Erzeugens ein Betätigungssignal erzeugt werden, das einen Bremsdruck des zumindest einen Federspeichers der Feststellbremse abhängig von dem Anforderungssignal und zusätzlich oder alternativ abhängig von den Fahrdaten steuert. Der Bremsdruck des zumindest einen Fehlerspeichers kann bei unbetätigter Feststellbremse einen hohen Druckwert aufweisen und bei betätigter oder zumindest teilweise betätigter Feststellbremse einen niedrigen Druckwert aufweisen. Eine solche Ausführungsform bietet den Vorteil, dass ein Bremsdruck situationsabhängig und bedarfsgerecht eingestellt werden kann, um Sicherheit und Stabilität des Fahrzeugs zu erhöhen.

Dabei kann im Schritt des Erzeugens ein Betätigungssignal erzeugt werden, das den Bremsdruck von einem ersten Niveau, das eine unbetätigte Feststellbremse repräsentiert, zu einem zweiten Niveau ändert, das oberhalb eines Druckschwellenwerts liegt, bei dem Räder des Fahrzeugs blockieren, für die einstellbare Zeitdauer durch das Pulsen um das zweite Niveau schwanken lässt und nach Ablauf der einstellbaren Zeitdauer zu einem dritten Niveau ändert, das eine dauerhaft und zusätzlich oder alternativ vollständig betätigte Feststellbremse repräsentiert. Eine solche Ausführungsform bietet den Vorteil, dass die gepulste Betätigung durch eine unaufwendig überwachbare Steuerung des Bremsdrucks realisiert werden kann.

Zudem kann im Schritt des Einlesens das Anforderungssignal von einer Schnittstelle zu einer manuellen Betätigungseinrichtung des Fahrzeugs eingelesen werden. Bei der Schnittstelle kann es sich um eine Eingangsschnittstelle handeln. Die Eingangsschnittstelle kann Teil eines Steuergeräts zum Ausführen des Verfahrens oder Teil der Bedieneinrichtung sein oder als eine dazwischenliegende Einheit ausgeführt sein. Die Betätigungseinrichtung kann auch als eine Bedieneinrichtung bezeichnet werden. Die Betätigungseinrichtung kann einen Hebel, zumindest einen Schalter, zumindest eine Taste oder ein Bedienfeld als eine Benutzerschnittstelle aufweisen. Die Bedieneinrichtung kann von einem Führer des Fahrzeugs betätigt werden. Eine solche Ausführungsform bietet den Vorteil, dass ein unabsichtlicher Betätigungswunsch zuverlässig erkannt werden kann und eine Überprüfung durch haptische Rückkopplung ermöglicht werden kann.

Auch kann das Verfahren einen Schritt des Ausgebens des Betätigungssignals an eine Schnittstelle zu der Feststellbremse aufweisen. Die Schnittstelle zu der Feststellbremse kann auch als eine Ausgangsschnittstelle bezeichnet werden. Die Ausgangsschnittstelle kann Teil eines Steuergeräts zum Ausführen des Verfahrens oder Teil der Feststellbremse sein oder als eine dazwischenliegende Einheit ausgeführt sein. Eine solche Ausführungsform bietet den Vorteil, dass ein Bremsdruck der Feststellbremse auf einfache und sichere Weise gesteuert werden kann.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Es wird auch ein Feststellbremssystem für ein Fahrzeug vorgestellt, wobei das Feststellbremssystem folgende Merkmale aufweist:
eine Feststellbremse, wobei die Feststellbremse zumindest einen Federspeicher aufweist und zumindest einer Achse des Fahrzeugs zugeordnet ist; und
eine Ausführungsform des vorstehend genannten Steuergeräts, wobei das Steuergerät signalübertragungsfähig mit der Feststellbremse verbunden ist.

In Verbindung mit dem Feststellbremssystem kann eine Ausführungsform des vorstehend genannten Steuergeräts vorteilhaft eingesetzt oder verwendet werden, um die Feststellbremse zu steuern. Ferner kann das Feststellbremssystem eine manuelle Betätigungseinrichtung aufweisen. Das Steuergerät kann mit der Betätigungseinrichtung signalübertragungsfähig verbunden sein.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung eines Fahrzeugs mit einem Feststellbremssystem gemäß einem Ausführungsbeispiel;
Fig. 2 ein Ablaufdiagramm eines Verfahrens zum Steuern gemäß einem Ausführungsbeispiel; und
Fig. 3 schematische Diagramme zu Betrieb und Funktionsweise des Feststellbremssystems aus Fig. 1.

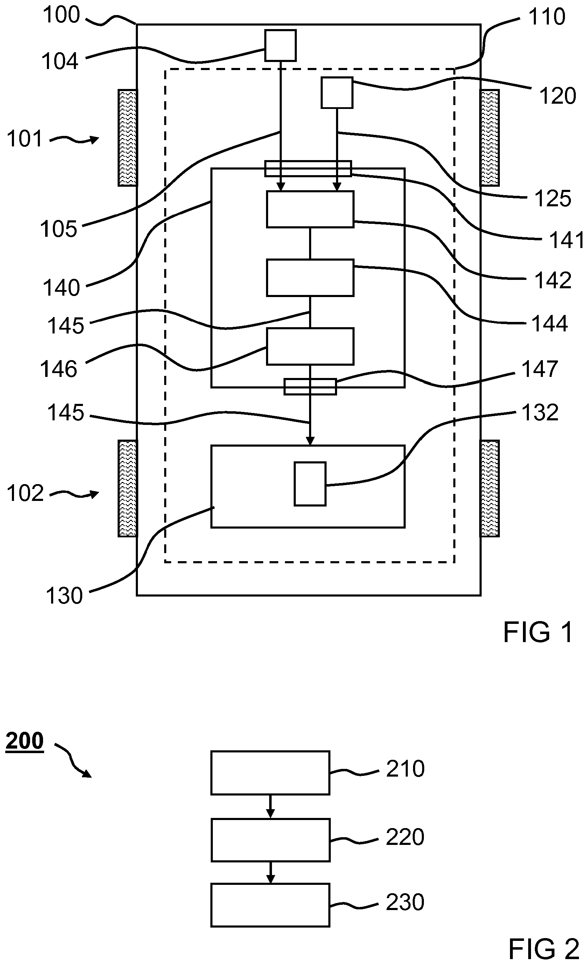

Fig. 1 zeigt eine schematische Darstellung eines Fahrzeugs 100 mit einem Feststellbremssystem 110 gemäß einem Ausführungsbeispiel. Das Fahrzeug 100 ist ein Kraftfahrzeug, beispielsweise ein Nutzfahrzeug, insbesondere ein Lastkraftwagen oder dergleichen.

Von dem Fahrzeug 100 sind in der Darstellung von Fig. 1 das Feststellbremssystem 110, eine erste Achse 101, eine zweite Achse 102 und ein Fahrdatensensor 104 gezeigt. Somit weist das Fahrzeug 100 die erste Achse 101, die zweite Achse 102, den Fahrdatensensor 104 und das Feststellbremssystem 110 auf. Der Fahrdatensensor 104 ist ausgebildet, um Betriebsparameter des Fahrzeugs 100 zu erfassen und in Gestalt von Fahrdaten 105 bereitzustellen. Die Fahrdaten 105 repräsentieren eine Geschwindigkeit, eine Zuladung, eine Beschleunigung, einen Schlupf von Rädern des Fahrzeugs 100 auf einer Fahrbahn und zusätzlich oder alternativ weitere statische oder dynamische Betriebsparameter. Der Fahrdatensensor 104 ist signalübertragungsfähig mit dem Feststellbremssystem 110 verbunden.

Das Feststellbremssystem 110 weist eine Feststellbremse 130 mit zumindest einem Federspeicher 132, ein Steuergerät 140 und gemäß dem hier dargestellten Ausführungsbeispiel eine manuelle Betätigungseinrichtung 120 bzw. Bedieneinrichtung auf. Die Feststellbremse 130 ist der zweiten Achse 102 des Fahrzeugs 100 zugeordnet. Die Feststellbremse 130 weist den zumindest einen Federspeicher 132 auf. Das Steuergerät 140 ist signalübertragungsfähig mit der Feststellbremse 130 verbunden.

Ferner ist das Steuergerät 140 signalübertragungsfähig mit der Betätigungseinrichtung 120 verbunden. Die Betätigungseinrichtung 120 weist einen Hebel, zumindest einen Schalter, zumindest eine Taste oder ein Bedienfeld als eine Benutzerschnittstelle auf. Die Betätigungseinrichtung 120 ist ausgebildet, um ansprechend auf eine Bedienung der Betätigungseinrichtung 120 seitens eines Nutzers ein Anforderungssignal 125 bereitzustellen. Das Anforderungssignal 125 repräsentiert eine angeforderte Betätigung der Feststellbremse 130 bzw. einen Betätigungswunsch hinsichtlich der Feststellbremse 130. Zudem ist das Steuergerät 140 signalübertragungsfähig mit dem Fahrdatensensor 104 verbunden.

Das Steuergerät 140 ist ausgebildet, um die Feststellbremse 130 zu steuern.

Insbesondere ist das Steuergerät 140 ausgebildet, um zum Steuern der Feststellbremse 130 einen Bremsdruck in dem zumindest einen Federspeicher 132 zu regulieren. Das Steuergerät 140 weist eine Einleseeinrichtung 142 und ein Erzeugungseinrichtung 144 auf. Gemäß einem Ausführungsbeispiel weist das Steuergerät 140 zudem eine Ausgabeeinrichtung 146 sowie eine Eingangsschnittstelle 141 und eine Ausgangsschnittstelle 147 auf.

Die Einleseeinrichtung 142 ist ausgebildet, um das Anforderungssignal 125 und die Fahrdaten 105 einzulesen. Gemäß einem Ausführungsbeispiel ist die Einleseeinrichtung 142 ausgebildet, um das Anforderungssignal 125 von der Eingangsschnittstelle 141 einzulesen. Die Eingangsschnittstelle 141 repräsentiert eine Schnittstelle zu der manuellen Betätigungseinrichtung 120. Anders ausgedrückt ist die Einleseeinrichtung 142 hierbei ausgebildet, um das Anforderungssignal 125 über die Eingangsschnittstelle 141 von der Betätigungseinrichtung 120 einzulesen. Ferner ist die Einleseeinrichtung 142 ausgebildet, um die Fahrdaten 105 über die Eingangsschnittstelle 141 von dem Fahrdatensensor 104 einzulesen. Die Einleseeinrichtung 142 und die Erzeugungseinrichtung 144 sind signalübertragungsfähig miteinander verbunden.

Die Erzeugungseinrichtung 144 ist ausgebildet, um unter Verwendung des Anforderungssignals 125 und der Fahrdaten 105 ein Betätigungssignal 145 zum Betätigen der Feststellbremse 130 zu erzeugen. Das mittels der Erzeugungseinrichtung 144 erzeugte Betätigungssignal 145 bewirkt für eine einstellbare Zeitdauer ein gepulstes Betätigen der Feststellbremse 130, um die Feststellbremse 130 zu steuern. Die Erzeugungseinrichtung 144 ist gemäß einem Ausführungsbeispiel mit der Ausgabeeinrichtung 146 signalübertragungsfähig verbunden.

Die gemäß einem Ausführungsbeispiel vorgesehene Ausgabeeinrichtung 146 ist ausgebildet, um das mittels der Erzeugungseinrichtung 144 erzeugte Betätigungssignal 145 an die Ausgangsschnittstelle 147 auszugeben. Die Ausgangsschnittstelle 147 repräsentiert eine Schnittstelle zu der Feststellbremse 130. Somit ist die Ausgabeeinrichtung 146 ausgebildet, um das Betätigungssignal 145 über die Ausgangsschnittstelle 147 an die Feststellbremse 130 auszugeben.

Gemäß einem Ausführungsbeispiel ist die Erzeugungseinrichtung 144 ausgebildet, um das Betätigungssignal 145 zu erzeugen, wenn die Fahrdaten 105 eine Bewegung des Fahrzeugs 100 repräsentieren bzw. darauf hindeuten. Auch ist die Erzeugungseinrichtung 144 gemäß einem Ausführungsbeispiel ausgebildet, um die einstellbare Zeitdauer abhängig von dem Anforderungssignal 125 und/oder abhängig von den Fahrdaten 105 einzustellen. Genauer gesagt ist hierbei die Erzeugungseinrichtung 144 ausgebildet, um die einstellbare Zeitdauer abhängig von einem Pegel bzw. Signalpegel des Anforderungssignals 125 und/oder abhängig von den Fahrdaten 105 bzw. einer von den Fahrdaten 105 repräsentierten Information über Parameter des Fahrzeugs 100 einzustellen. Ferner ist die Erzeugungseinrichtung 144 gemäß einem Ausführungsbeispiel ausgebildet, um ein Betätigungssignal 145 zu erzeugen, das nach einem Ablauf der einstellbaren Zeitdauer abhängig von dem Anforderungssignal 125 ein dauerhaftes Betätigen der Feststellbremse 130 bewirkt. Dabei repräsentiert das dauerhafte Betätigen ein Betätigen der Feststellbremse 130 für eine vordefinierbare Zeitdauer ohne Pulsen.

Genauer gesagt ist die Erzeugungseinrichtung 144 gemäß einem Ausführungsbeispiel ausgebildet, um ein Betätigungssignal 145 zu erzeugen, das einen Bremsdruck des zumindest einen Federspeichers 132 der Feststellbremse 130 abhängig von dem Anforderungssignal 125 und/oder abhängig von den Fahrdaten 105 steuert bzw. eine Regulierung des Bremsdrucks abhängig von dem Anforderungssignal 125 und/oder abhängig von den Fahrdaten 105 bewirkt. Hierbei ist die Erzeugungseinrichtung 144 insbesondere ausgebildet, um ein Betätigungssignal 145 zu erzeugen, das den Bremsdruck von einem ersten Niveau, das eine unbetätigte Feststellbremse repräsentiert, zu einem zweiten Niveau ändert, das oberhalb eines Druckschwellenwerts liegt, bei dem Räder des Fahrzeugs 100 blockieren, für die einstellbare Zeitdauer durch das Pulsen um das zweite Niveau schwanken lässt und nach Ablauf der einstellbaren Zeitdauer zu einem dritten Niveau ändert, das eine dauerhaft und/oder vollständig betätigte Feststellbremse 130 repräsentiert.

**Fig. 2** zeigt ein Ablaufdiagramm eines Verfahrens 200 zum Steuern gemäß einem Ausführungsbeispiel. Das Verfahren 200 zum Steuern ist ausführbar, um eine Feststellbremse für ein Fahrzeug zu steuern bzw. einen Betrieb derselben zu steuern. Genauer gesagt ist das Verfahren 200 zum Steuern in Verbindung mit dem Feststellbremssystem aus Fig. 1 oder einem ähnlichen Feststellbremssystem ausführbar. Hierbei ist das Verfahren 200 zum Steuern ausführbar, um die Feststellbremse aus Fig. 1 oder eine ähnliche Feststellbremse zu steuern. Dabei ist das Verfahren 200 zum Steuern mittels des Steuergerätes aus Fig. 1 oder eines ähnlichen Steuergerätes ausführbar.

In einem Schritt 210 des Einlesens werden bei dem Verfahren 200 zum Steuern ein Anforderungssignal, das eine angeforderte Betätigung der Feststellbremse repräsentiert, und Fahrdaten des Fahrzeugs eingelesen. Nachfolgend wird in einem Schritt 220 des Erzeugens unter Verwendung des Anforderungssignals und der Fahrdaten ein Betätigungssignal zum Betätigen der Feststellbremse erzeugt. Das im Schritt 220 des Erzeugens erzeugte Betätigungssignal bewirkt für eine einstellbare Zeitdauer ein gepulstes Betätigen der Feststellbremse, um die Feststellbremse zu steuern.

Gemäß einem Ausführungsbeispiel wird nachfolgend in einem Schritt 230 des Ausgebens das im Schritt 220 des Erzeugens erzeugte Betätigungssignal an eine Schnittstelle zu der Feststellbremse ausgegeben.

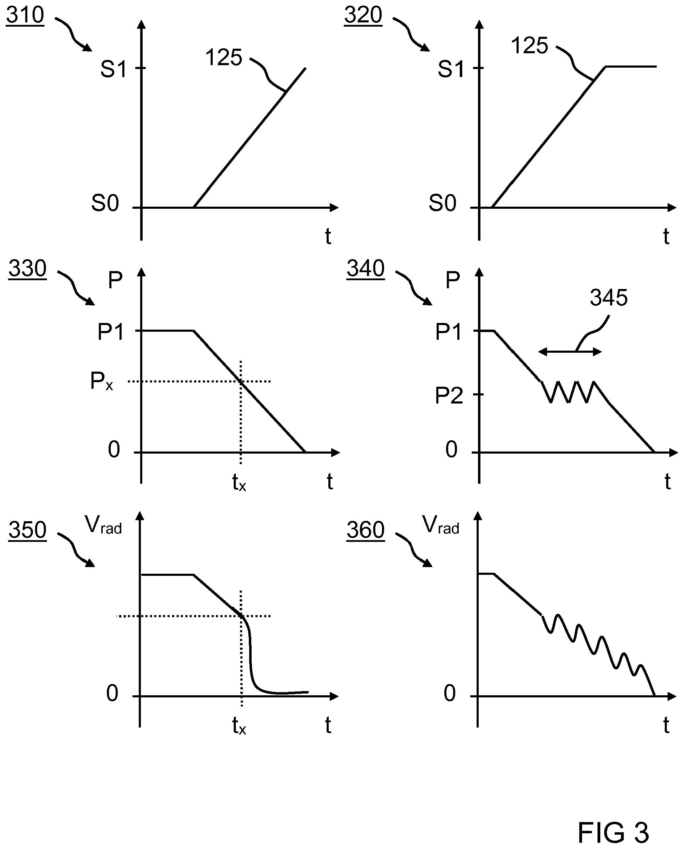

**Fig. 3** zeigt schematische Diagramme 310, 320, 330, 340, 350 und 360 zu Betrieb und Funktionsweise des Feststellbremssystems aus Fig. 1. Hierbei beziehen sich ein erstes Schaltstellung-Zeit-Diagramm 310, ein erstes Bremsdruck-Zeit-Diagramm 330 und ein erstes Radgeschwindigkeit-Zeit-Diagramm 350 auf eine Situation, in der das Steuergerät des Feststellbremssystems aus Fig. 1 Anforderungssignale 125 direkt an die Feststellbremse weitergibt. Hierbei kann ein Rad des Fahrzeugs ab einem kritischen

Bremsdruck blockieren. Hingegen beziehen sich ein zweites Schaltstellung-Zeit-Diagramm 320, ein zweites Bremsdruck-Zeit-Diagramm 340 und ein zweites Radgeschwindigkeit-Zeit-Diagramm 360 auf eine Situation, in der das Steuergerät des Feststellbremssystems aus Fig. 1 ansprechend auf Anforderungssignale 125 zumindest temporär eine gepulste Betätigung der Feststellbremse bewirkt, wodurch ein Bremsdruck der Feststellbremse ebenfalls gepulst wird, um ein blockieren von Rädern des Fahrzeugs zu verhindern.

In dem ersten Schaltstellung-Zeit-Diagramm 310 und in dem zweiten Schaltstellung-Zeit-Diagramm 320 ist jeweils an der Abszissenachse die Zeit t aufgetragen und ist an der Ordinatenachse eine Schaltstellung der manuellen Betätigungseinrichtung des Feststellbremssystems aufgetragen. Die Graphen in dem ersten Schaltstellung-Zeit-Diagramm 310 und in dem zweiten Schaltstellung-Zeit-Diagramm 320 repräsentieren jeweils das Anforderungssignal 125 des Feststellbremssystems aus Fig. 1. Hierbei steigt das Anforderungssignal 122 in dem ersten Schaltstellung-Zeit-Diagramm 310 sowie in dem zweiten Schaltstellung-Zeit-Diagramm 320 von einem ersten Signalpegel, der einer Neutralstellung S0 der Betätigungseinrichtung entspricht, auf einen zweiten Signalpegel an, der einer Aktivstellung S1 der Betätigungseinrichtung entspricht. Dieser Anstieg ist insbesondere ein linearer Anstieg und entspricht einer Betätigungsbewegung bzw. Bedienbewegung von der Neutralstellung S0 in die Aktivstellung S1, die an der manuellen Betätigungseinrichtung vorgenommen wird.

In dem ersten Bremsdruck-Zeit-Diagramm 330 und in dem zweiten Bremsdruck-Zeit-Diagramm 340 ist jeweils an der Abszissenachse die Zeit t aufgetragen und ist an der Ordinatenachse ein an der Feststellbremse bzw. dem Federspeicher des Feststellbremssystems anliegender Bremsdruck P bzw. ein durch das Betätigungssignal aus Fig. 1 bewirkter Bremsdruck P aufgetragen. In dem ersten Bremsdruck-Zeit-Diagramm 330 ist ein erstes Niveau P1 des Bremsdrucks eingezeichnet. Das erste Niveau P1 des Bremsdrucks repräsentiert einen unbetätigten Zustand der Feststellbremse. Das erste Niveau P1 des Bremsdrucks P1 beträgt beispielsweise 8,5 bar oder dergleichen. Der Bremsdruck P weist während des Anstiegs des Anforderungssignals 125 einen Abfall, hier insbesondere einen linearen Abfall, von dem ersten Niveau P1 auf einen Bremsdruck von 0 auf. Ein Bremsdruck von 0 repräsentiert einen vollständig betätigten Zustand der Feststellbremse. Ab einem unterschreiten eines kritischen Bremsdrucks Pₓ zwischen dem ersten Niveau P1 und einem Bremsdruck von 0 kann es zu einem blockieren zumindest eines Rades des Fahrzeugs kommen. Dieser kritische Bremsdruck Pₓ tritt zu einem kritischen Zeitpunkt tₓ auf.

In dem zweiten Bremsdruck-Zeit-Diagramm 340 sind das erste Niveau P1 des Bremsdrucks und ein zweites Niveau P2 des Bremsdrucks eingezeichnet. Der Bremsdruck P weist während eines ersten Teilabschnittes des Anstiegs des Anforderungssignals 125 hierbei einen Abfall, insbesondere einen linearen Abfall, von dem ersten Niveau P1 auf das zweite Niveau P2 auf. Das zweite Niveau P2 des Bremsdrucks repräsentiert einen teilweise betätigten Zustand der Feststellbremse. Während eines zweiten Teilabschnittes des Anstiegs des Anforderungssignals 125 weist der Bremsdruck P Schwankungen um das zweite Niveau P2 herum auf. Die Schwankungen des Bremsdrucks P um das zweite Niveau P2 des Bremsdrucks bestehen für die einstellbare Zeitdauer 345. Anschließend sinkt der Bremsdruck P von dem zweiten Niveau P2 auf einen Bremsdruck von 0 ab. Somit erfolgt in dem zweiten Bremsdruck-Zeit-Diagramm 340 aufgrund der gepulsten Betätigung mittels des Steuergerätes zunächst eine Reduzierung des Bremsdrucks P ähnlich jener in dem ersten Bremsdruck-Zeit-Diagramm 330, gefolgt von einem Pulsen bis zum Ablauf der einstellbaren Zeitdauer 345, und schließlich eine weitere Reduzierung des Bremsdrucks P zum Einlegen der Feststellbremse. Der Druckgraph in dem zweiten Bremsdruck-Zeit-Diagramm 340 weist somit während der einstellbaren Zeitdauer einen Sägezahnverlauf auf, flankiert von zwei linearen, abfallenden Flanken.

In dem ersten Radgeschwindigkeit-Zeit-Diagramm 350 und in dem zweiten Radgeschwindigkeit-Zeit-Diagramm 360 ist jeweils an der Abszissenachse die Zeit t aufgetragen und ist an der Ordinatenachse eine Radgeschwindigkeit V_{rad} eines Rades des Fahrzeugs aufgetragen. In dem ersten Radgeschwindigkeit-Zeit-Diagramm 350 weist die Radgeschwindigkeit V_{rad} während des Anstiegs des Anforderungssignals 125 und des Abfalls des Bremsdrucks P zunächst einen ersten Abfall, insbesondere einen linearen Abfall, mit einer geringen Steigung auf, der ab dem kritischen Zeitpunkt tₓ von einem zweiten Abfall mit einer hohen Steigung gefolgt ist. Die hohe Steigung entspricht hierbei einem Blockieren zumindest eines Rades des Fahrzeugs. In dem zweiten Radgeschwindigkeit-Zeit-Diagramm 360 weist die Radgeschwindigkeit V_{rad} zunächst einen ersten Abfall auf, der dem ersten Abfall der Radgeschwindigkeit V_{rad} aus dem ersten Radgeschwindigkeit-Zeit-Diagramm 350 entspricht oder ähnelt. Während der einstellbaren Zeitdauer 345 weist die Radgeschwindigkeit V_{rad} dann einen zweiten Abfall der Radgeschwindigkeit V_{rad} auf 0 auf, wobei der zweite Abfall diskontinuierlich in Wellenbewegungen erfolgt, um einem Blockieren zumindest eines Rades des Fahrzeugs vorzubeugen.

### BEZUGSZEICHENLISTE

- 100: Fahrzeug
- 101: erste Achse
- 102: zweite Achse
- 104: Fahrdatensensor
- 105: Fahrdaten
- 110: Feststellbremssystem
- 120: manuelle Betätigungseinrichtung bzw. Bedieneinrichtung
- 125: Anforderungssignal
- 130: Feststellbremse
- 132: Federspeicher
- 140: Steuergerät
- 141: Eingangsschnittstelle
- 142: Einleseeinrichtung
- 144: Erzeugungseinrichtung
- 145: Betätigungssignal
- 146: Ausgabeeinrichtung
- 147: Ausgangsschnittstelle
- 200: Verfahren zum Steuern
- 210: Schritt des Einlesens
- 220: Schritt des Erzeugens
- 230: Schritt des Ausgebens
- 310: erstes Schaltstellung-Zeit-Diagramm
- S0: Neutralstellung der Betätigungseinrichtung
- S1: Aktivstellung der Betätigungseinrichtung
- t: Zeit
- 320: zweites Schaltstellung-Zeit-Diagramm
- 330: erstes Bremsdruck-Zeit-Diagramm
- P: Bremsdruck der Feststellbremse
- P1: erstes Niveau des Bremsdrucks
- 340: zweites Bremsdruck-Zeit-Diagramm
- 345: einstellbare Zeitdauer
- P2: zweites Niveau des Bremsdrucks
- 350: erstes Radgeschwindigkeit-Zeit-Diagramm
- V_{rad}: Radgeschwindigkeit
- 360: zweites Radgeschwindigkeit-Zeit-Diagramm

## Patentansprüche

1. Verfahren (200) zum Steuern einer Feststellbremse (130) für ein Fahrzeug (100), wobei die Feststellbremse (130) zumindest einen Federspeicher (132) aufweist und zumindest einer Achse (102) des Fahrzeugs (100) zugeordnet ist, wobei das Verfahren (200) folgende Schritte aufweist:
Einlesen (210) eines Anforderungssignals (125), das eine angeforderte Betätigung der Feststellbremse (130) repräsentiert, und von Fahrdaten (105) des Fahrzeugs (100); und
Erzeugen (220) eines Betätigungssignals (145) zum Betätigen der Feststellbremse (130) unter Verwendung des Anforderungssignals (125) und der Fahrdaten (105), wobei das Betätigungssignal (145) für eine einstellbare Zeitdauer (345) ein gepulstes Betätigen der Feststellbremse (130) bewirkt, um die Feststellbremse (130) zu steuern, **dadurch gekennzeichnet, dass** im Schritt (220) des Erzeugens ein Betätigungssignal (145) erzeugt wird, das nach einem Ablauf der einstellbaren Zeitdauer (345) abhängig von dem Anforderungssignal (125) ein dauerhaftes Betätigen der Feststellbremse (130) bewirkt.

2. Verfahren (200) gemäß Anspruch 1, **dadurch gekennzeichnet, dass** im Schritt (220) des Erzeugens das Betätigungssignal (145), das für die einstellbare Zeitdauer (345) das gepulste Betätigen der Feststellbremse (130) bewirkt, erzeugt wird, wenn die Fahrdaten (105) auf eine Bewegung des Fahrzeugs (100) hindeuten.

3. Verfahren (200) gemäß einem der vorangegangenen Ansprüche, **dadurch gekennzeichnet, dass** im Schritt (220) des Erzeugens die einstellbare Zeitdauer (345) abhängig von einem Pegel des Anforderungssignals (125) und/oder abhängig von den Fahrdaten (105) eingestellt wird.

4. Verfahren (200) gemäß einem der vorangegangenen Ansprüche, **dadurch gekennzeichnet, dass** im Schritt (220) des Erzeugens ein Betätigungssignal (145) erzeugt wird, das einen Bremsdruck (P) des zumindest einen Federspeichers (132) der Feststellbremse (130) abhängig von dem Anforderungssignal (125) und/oder abhängig von den Fahrdaten (105) steuert.

5. Verfahren (200) gemäß Anspruch 4, **dadurch gekennzeichnet, dass** im Schritt (220) des Erzeugens ein Betätigungssignal (145) erzeugt wird, das den Bremsdruck (P) von einem ersten Niveau (P1), das eine unbetätigte Feststellbremse (130) repräsentiert, zu einem zweiten Niveau (P2) ändert, das oberhalb eines Druckschwellenwerts (Pₓ) liegt, bei dem Räder des Fahrzeugs (100) blockieren, für die einstellbare Zeitdauer (345) durch das Pulsen um das zweite Niveau (P2) schwanken lässt und nach Ablauf der einstellbaren Zeitdauer (345) zu einem dritten Niveau (0) ändert, das eine dauerhaft und/oder vollständig betätigte Feststellbremse (130) repräsentiert.

6. Verfahren (200) gemäß einem der vorangegangenen Ansprüche, **dadurch gekennzeichnet, dass** im Schritt (210) des Einlesens das Anforderungssignal (125) von einer Schnittstelle (141) zu einer manuellen Betätigungseinrichtung (120) des Fahrzeugs (100) eingelesen wird.

7. Verfahren (200) gemäß einem der vorangegangenen Ansprüche, **gekennzeichnet durch** einen Schritt (230) des Ausgebens des Betätigungssignals (145) an eine Schnittstelle (147) zu der Feststellbremse (130).

8. Steuergerät (140), das eingerichtet ist, um die Schritte des Verfahrens (200) gemäß einem der vorangegangenen Ansprüche in entsprechenden Einheiten (142, 144, 146) auszuführen und/oder anzusteuern.

9. Feststellbremssystem (110) für ein Fahrzeug (100), wobei das Feststellbremssystem (110) folgende Merkmale aufweist:
eine Feststellbremse (130), wobei die Feststellbremse (130) zumindest einen Federspeicher (132) aufweist und zumindest einer Achse (102) des Fahrzeugs (100) zugeordnet ist; und
das Steuergerät (140) gemäß Anspruch 8, wobei das Steuergerät (140) signalübertragungsfähig mit der Feststellbremse (130) verbunden ist.

10. Computerprogramm, das dazu eingerichtet ist, das Verfahren (200) gemäß einem der Ansprüche 1 bis 7 auszuführen und/oder anzusteuern.

11. Maschinenlesbares Speichermedium, auf dem das Computerprogramm nach Anspruch 10 gespeichert ist.

## Claims

1. Method (200) for controlling a parking brake (130) for a vehicle (100), wherein the parking brake (130) has at least one spring mechanism(132) and is assigned to at least one axle (102) of the vehicle(100), wherein the method (200) has the following steps:
reading in (210) a request signal (125) which represents a requested activation of the parking brake(130), and travel data (105) of the vehicle (100); and
generating (220) an activation signal (145) for activating the parking brake(130) using the request signal (125) and the travel data (105), where the activation signal (145) brings about pulsed activation of the parking brake (130) for an adjustable time period (345), in order to control the parking brake (130), **characterised in that** in the step (220) of generating an activation signal (145) is generated which brings about, on expiry of the adjustable time period (345), a permanent activation of the parking brake (130) as a function of the request signal (125).

2. Method (200) according to claim 1, **characterised in that** in the step (220) of generating the activation signal (145) which brings about the pulsed activation pulsed activation of the parking brake (130) for the adjustable time period (345) is generated if the travel data(105) indicates a movement of the vehicle(100).

3. Method (200) according to any of the preceding claims, **characterised in that** in the step (220) of generating the adjustable time period (345) is adjusted in accordance with a level of the request signal(125) and/or in accordance with the travel data(105).

4. Method (200) according to any of the preceding claims, **characterised in that** in the step (220) of generating an activation signal (145) is generated which controls a brake pressure (P) of the at least one spring mechanism (132) of the parking brake (130) in accordance with the request signal (125) and/or in accordance with the travel data(105).

5. Method (200) according to any of the preceding claims, **characterised in that** in the step (220) of generating an activation signal (145) is generated which changes the brake pressure (P) from a first level (P1), which represents an inactivated parking brake (130), to a second level (P2), which lies above a pressure threshold value (Pₓ) at which wheels of the vehicle (100) lock, which signal permits the brake pressure to fluctuate about the second level (P2) for the adjustable time period (345) as a result of the pulsing, and changes, after the expiry of the adjustable time period (345), to a third level (0) which represents a permanently activated and/or completely activated parking brake (130).

6. Method (200) according to any of the preceding claims, **characterised in that** in the step (210) of reading in the request signal (125) is read in from an interface (141) to a manual activation device (120) of the vehicle (100).

7. Method (200) according to any of the preceding claims, **characterised by** a step (230) of outputting the activation signal (145) to an interface (147) with the parking brake (130).

8. Control device (140) which is configured to carry out and/or actuate the steps of the method (200) according to any of the preceding claims in corresponding units (142, 144, 146).

9. Parking brake system (110) for a vehicle (100), wherein the parking brake system (110) has the following features:
a parking brake (130), wherein the parking brake (130) has at least one spring mechanism (132) and is assigned to at least one axle(102) of the vehicle (100); and
the control device (140) according to claim 9, wherein the control device (140) is connected in a way which is enabled for the transmission of signals to the parking brake (130).

10. Computer programme which is configured to carry out and/or actuate the method (200) according to any of claims 1 to 7.

11. Machine-readable storage medium in which the computer programme according to claim 10 is stored.

## Revendications

1. Procédé (200) pour commander un frein (130) d'immobilisation pour un véhicule (100), le frein (130) d'immobilisation comprenant au moins un accumulateur (132) à ressort et étant associé à au moins un essieu (102) du véhicule (100), le procédé (200) comportant les étapes suivantes :
on entre (210) en mémoire un signal (125) de prescription, qui représente un actionnement prescrit du frein (130) d'immobilisation, et des données (105) de conduite du véhicule (100) ; et
on produit (220) un signal (145) d'actionnement pour actionner le frein (130) d'immobilisation en utilisant le signal (125) de prescription et les données (105) de conduite, le signal (145) d'actionnement provoquant pour une durée (345) réglable un actionnement puisé du frein (130) d'immobilisation pour commander le frein (130) d'immobilisation, **caractérisé en ce que**, à l'étape (220) de la production, on produit un signal (145) d'actionnement qui, après l'écoulement d'une durée (345) réglable, provoque, en fonction du signal (125) de prescription, un actionnement durable du frein (130) d'immobilisation.

2. Procédé (200) suivant la revendication 1, **caractérisé en ce que**, à l'étape (220) de la production, le signal (145) d'actionnement, qui provoque pour la durée (345) réglable l'actionnement puisé du frein (130) d'immobilisation, est produit quand les données (105) de conduite indiquent un déplacement du véhicule (100).

3. Procédé (200) suivant l'une des revendications précédentes, **caractérisé en ce que**, à l'étape (220) de la production, la durée (345) réglable est réglée en fonction d'un niveau du signal (125) de prescription et/ou en fonction des données (105) de conduite.

4. Procédé (200) suivant l'une des revendications précédentes, **caractérisé en ce que**, à l'étape (220) de la production, un signal (145) d'actionnement est produit qui commande une pression (P) de freinage du au moins un accumulateur (132) à ressort du frein (130) d'immobilisation en fonction du signal (125) de prescription et/ou en fonction des données (105) de conduite.

5. Procédé (200) suivant la revendication 4, **caractérisé en ce que**, à l'étape (220) de la production, on produit un signal (145) d'actionnement qui modifie la pression (P) de freinage d'un premier niveau (P1), qui représente un frein (130) d'immobilisation non actionné, à un deuxième niveau (P2), qui se trouve au-dessus d'une valeur (Px) de seuil de pression, pour laquelle des roues du véhicule (100) se bloquent, qui, pour la durée (345) réglable, la fait osciller autour du deuxième niveau (P2) par la pulsation et qui, après écoulement de la durée (345) réglable, la modifie à un troisième niveau (0) qui représente un frein (130) d'immobilisation actionné durablement et/ou totalement.

6. Procédé (200) suivant l'une des revendications précédentes, **caractérisé en ce que**, à l'étape (210) d'entrée en mémoire, le signal (125) de prescription est entré en mémoire d'une interface (141) vers un dispositif (120) manuel d'actionnement du véhicule (100) .

7. Procédé (200) suivant l'une des revendications précédentes, **caractérisé par** une étape (230) de l'émission du signal (145) d'actionnement sur une interface (147) à destination du frein (130) d'immobilisation.

8. Appareil (140) de commande, qui est configuré pour réaliser et/ou commander les étapes du procédé (200) suivant l'une des revendications précédentes dans des unités (142, 144, 146) correspondantes.

9. Système (110) de freinage d'immobilisation pour un véhicule (100), le système (110) de freinage d'immobilisation comportant les caractéristiques suivantes :
un frein (130) d'immobilisation, le frein (130) d'immobilisation comportant au moins un accumulateur (132) à ressort et étant associé à au moins un essieu (102) du véhicule (100) ; et
l'appareil (140) de commande suivant la revendication 8, l'appareil (140) de commande étant relié au frein (130) d'immobilisation d'une manière permettant la transmission de signaux.

10. Programme d'ordinateur qui est configuré pour réaliser et/ou commander le procédé (200) suivant l'une des revendications 1 à 7.

11. Moyen de mémorisation exploitable par machine sur lequel le programme d'ordinateur suivant la revendication 10 est mémorisé.
